# FASCICULE DE BREVET EUROPEEN

(11) **EP 2 226 454 B1**
(45) Date de publication et mention de la délivrance du brevet: **15.07.2020**
(21) Numéro de dépôt: 10155849.2
(22) Date de dépôt: 08.03.2010
(51) Int. Cl.: E05F 15/614, F16D 3/10, E05F 3/00

(54) **Dispositif d'ouverture de porte et ensemble comportant une porte équipé d'un tel dispositif**
Türöffnungsvorrichtung und Einheit, die eine mit einer solchen Vorrichtung ausgerüstete Tür umfasst
Door-opening device and assembly comprising a door provided with such a device

(30) Priorité: 06.03.2009 FR 0901044
(43) Date de publication de la demande: 08.09.2010
(73) Titulaire: Beuzelin, Jean-Claude, 76450 Veulettes sur Mer (FR)
(72) Inventeur: Beuzelin, Jean-Claude, 76450 Veulettes sur Mer (FR)
(74) Mandataire: Santarelli

(56) Documents cités:
- DE-A1- 19 544 594
- DE-A1-102006 059 224
- GB-A- 855 813
- US-A- 5 878 530
- US-A- 5 881 497
- US-A1- 2006 010 771

## Description

La présente invention concerne un dispositif d'ouverture de porte, particulièrement adapté aux personnes à mobilité réduite.

Les personnes à mobilité réduite doivent traditionnellement ouvrir la porte manuellement, ce qui est lourd et difficile dans ces conditions, d'autant plus que celles-ci doivent dans beaucoup de cas être tirées. C'est pourquoi une personne accompagnatrice est souvent nécessaire dans leurs déplacements.

Il existe des dispositifs d'ouverture de porte à distance, mais ceux-ci présentent généralement l'inconvénient de comprendre un nombre élevé de pièces mécaniques, telles que des chaînes ou des engrenages, nécessitant généralement un entretien et occupant dans tous les cas un grand espace.

US2006/010771 propose un système d'ouverture de porte tel que défini dans le préambule de la revendication 1.

L'invention vise à pallier ces inconvénients.

Elle propose à cet effet un dispositif d'ouverture de porte tel que défini dans la revendication 1.

Celui-ci permet donc de laisser la porte libre de tous mouvements pour les personnes valides et son automatisation pour les personnes à mobilité réduite. En particulier, le moteur permet l'entraînement de la porte en ouverture. Les caractéristiques précitées des arbres permettent en outre de le rendre débrayable lors de la fermeture, ce qui permet à la porte de revenir librement en position de fermeture et la sécurité puisque le moindre petit obstacle retient la porte.

Suivant des dispositions préférées, éventuellement combinées :
- l'étendue angulaire est de 360° et chaque secteur angulaire forme un angle inférieur ou égal à 120°, avantageusement compris entre 90° et 120°, et de préférence égal à 120°.
- le dispositif comporte une douille propre à être disposée coaxialement aux arbres et formant palier pour l'arbre côté porte.
- le moteur s'étend globalement à angle droit avec l'arbre associé à celui-ci et est en prise avec cet arbre par l'intermédiaire de moyens d'entraînement.
- les moyens d'entraînement comportent un engrenage à roue dentée et vis sans fin tangente.
- le moteur est programmé pour revenir à sa position initiale après avoir entraîné la porte vers sa position d'ouverture, de préférence après temporisation.
- le moteur est secouru par batterie(s) lors d'une panne électrique.
- le moteur est logé dans un boîtier.

L'invention propose également un ensemble comportant une porte et un dispositif tel que défini supra et destiné à l'équiper.

Suivant des dispositions préférées relatives à cet ensemble, éventuellement combinées :
- la porte comporte un profilé anti pince-doigt.
- la porte est munie d'un ferme-porte hydraulique.
- le dispositif d'ouverture est monté sous la porte en vue de pouvoir enterrer le moteur.

Les caractéristiques et avantages de l'invention ressortiront d'ailleurs de la description qui va suivre, à titre d'exemple, en référence aux dessins schématiques annexés sur lesquels :
- les figures 1a à 1c sont respectivement des vues en élévation, de profil et de dessus, d'un ensemble comportant une porte munie d'un dispositif d'ouverture de celle-ci conforme à l'invention ;
- la figure 2 est une vue en coupe longitudinale de ce dispositif ;
- la figure 3 reprend, à échelle supérieure, le détail de la figure 2 repérée par un encart III sur cette figure 2 ;
- la figure 4 est une vue en perspective de l'arbre moteur équipant ce dispositif d'ouverture ;
- la figure 5 est une vue en perspective de l'arbre porte équipant ce même dispositif d'ouverture ;
- la figure 6 est un schéma de principe représentant une position de chaque secteur angulaire des doigts d'entraînement des arbres précités sur une même étendue angulaire de 360° ; et
- la figure 7 reprend, à échelle supérieure, le détail de la figure 1c repéré par un encart VII sur cette figure 1c.

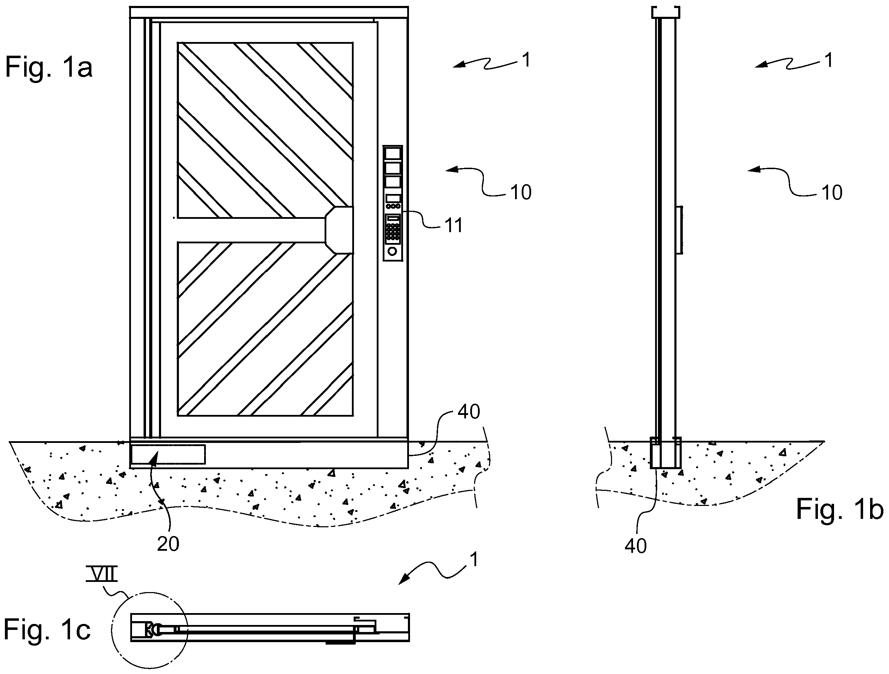

Sur les figures 1a à 1c est représenté un ensemble comportant une porte 10 et un dispositif d'ouverture de porte 20 conforme à l'invention. Ce dernier est logé dans un profilé 40 globalement en forme de U enterré, ici, dans le sol d'un bâtiment équipé de la porte 10.

La porte 10 est également équipée, ici, d'une platine 11 équipée d'un boîtier audio-vidéo ainsi que d'un dispositif de badgeage pour que les habitants puissent entrer. Pour les personnes à mobilité réduite, un boîtier de commande leur est fourni pour leur permettre d'ouvrir la porte 10 à distance afin de faciliter leur passage.

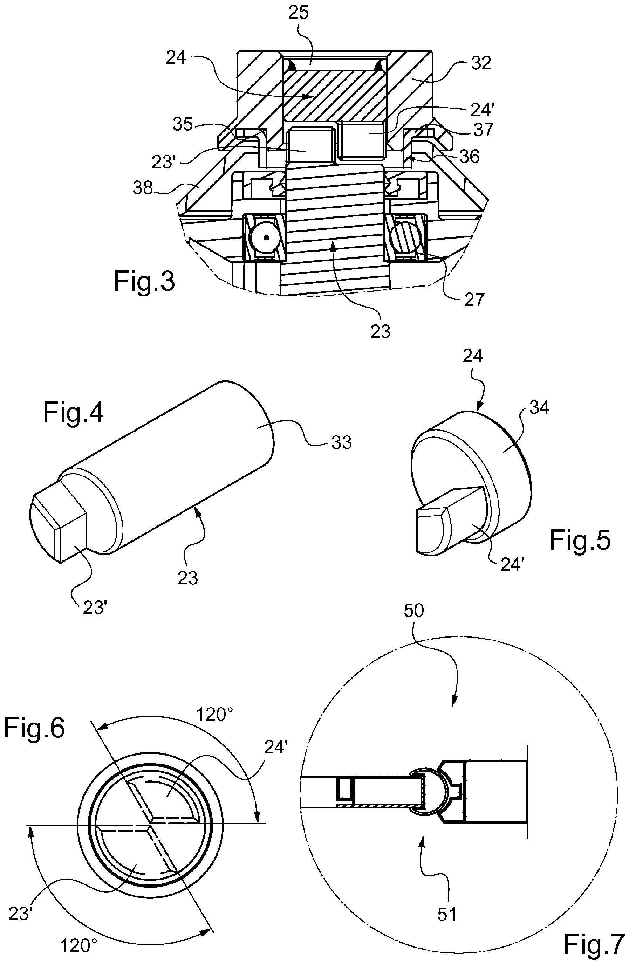

De plus, comme on le voit mieux sur les figures 1c et 7, cette porte 10 est équipée d'un système anti pince-doigt 50 afin d'assurer la sécurité lors du fonctionnement de celle-ci. En pratique, ce système 50 comporte un profilé 51 anti pince-doigt. Il s'agit ici d'un profilé pivot.

En outre, à la faveur du montage de la porte 10 sur un axe, comme on le verra plus en détail ci-après, elle ne présente de plus aucune partie saillante ou charnière.

Une fois la porte 10 fermée, elle est bloquée par des ventouses magnétiques afin d'éviter que des gens qui ne résident pas à cet endroit puissent y accéder.

L'assistance de cette porte 10, y compris du moteur du dispositif d'ouverture 20, se fait par batterie(s) en cas de panne électrique. Dans ce cas, les ventouses électromagnétiques se décondamnent, la porte 10 reste libre de tout mouvement, mais celle-ci est toujours assistée par batterie(s) pour les personnes à mobilité réduite.

La fermeture de la porte 10 est, par ailleurs, dans le cas du présent mode de réalisation, assistée par un ferme-porte encastré en partie haute (non visible sur les figures).

Des rampes d'accès (non représentées sur les figures) peuvent également venir compléter cet ensemble 1.

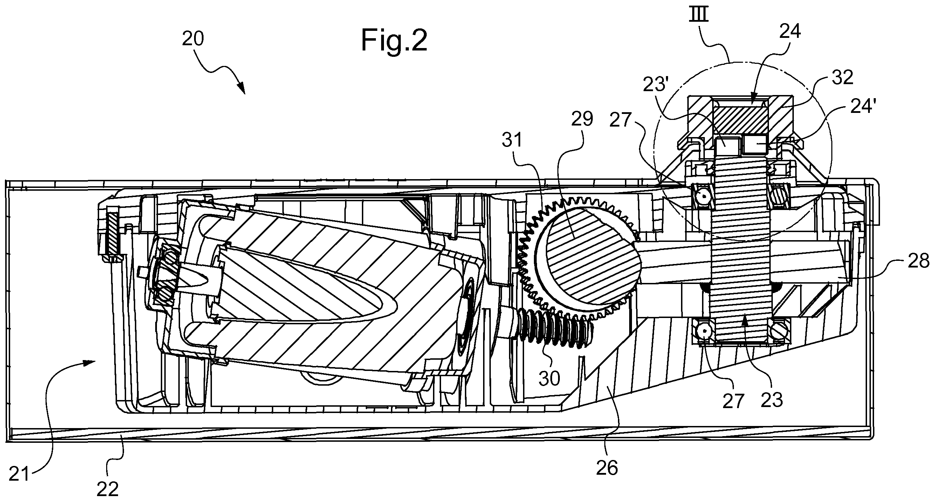

Comme on le voit mieux sur les figures 2 à 6, le dispositif d'ouverture de porte 20 comporte un moteur réversible 21 logé dans un boîtier 22.

Le dispositif 20 comporte, en outre, deux arbres agencés coaxialement dont l'un, 23, est en prise d'entraînement avec le moteur 21 et l'autre 24 est destiné à être solidarisé à la porte 10. Cette solidarisation est effectuée, dans le cas du présent mode de réalisation, par soudure, comme on le voit sur la figure 3 où l'arbre 24 est représenté soudé à un axe 25 permettant la rotation de la porte 10.

Ces deux arbres 23, 24, sont adaptés à coopérer l'un avec l'autre pour l'entraînement en rotation de la porte 10 par le moteur 21 vers sa position d'ouverture, au moyen de deux doigts d'entraînement 23', 24', prolongeant respectivement axialement chacun des deux arbres 23, 24, et occupant chacun un secteur angulaire évoluant sur une étendue angulaire commune aux deux secteurs angulaires et dont ils laissent libre une partie.

Comme on le voit encore sur la figure 2, le moteur 21 s'étend globalement à angle droit avec l'arbre 23 actionné par celui-ci et est en prise avec cet arbre 23 par l'intermédiaire de moyens d'entraînement.

Plus précisément, l'arbre 23 côté moteur est monté sur un support 26 du moteur 21, avec interposition de roulements à billes 27.

Il est attelé en rotation à une roue dentée 28 d'un engrenage comportant cette roue dentée 28 et une vis sans fin tangente 29, elle-même entraînée en rotation par une vis sans fin 30 accouplée au moteur 21 en vue de son actionnement. Cette vis sans fin 29 est pourvue, à cet effet, à l'une de ses extrémités longitudinales, d'une denture 31 propre à engrener avec la vis sans fin 30.

On notera encore que cette vis sans fin 29 est, elle aussi, supportée par le support 26 du moteur avec interposition de roulements à billes, non visibles sur les figures.

Le moteur 21 est du type 12 volts secouru par batterie(s) lors d'une panne électrique. Il est programmé pour revenir à sa position initiale après avoir entraîné la porte vers sa position d'ouverture, dans le cas du présent mode de réalisation après temporisation.

Une douille 32 est, en outre, disposée coaxialement aux arbres 23, 24, afin former un palier pour l'arbre 24 et, partant, l'axe 25 de la porte 10. Elle est emboîtée sur le dessus du boîtier 22, permettant ainsi, non seulement de former palier mais également d'éviter toute pénétration d'un corps étranger à l'intérieur du boîtier 22.

En pratique, cette douille 22 couvre ici l'arbre 24 sur sa partie hors doigt d'entraînement et les doigts d'entraînement 23', 24' sur la quasi-totalité de leur longueur.

Elle comporte, plus précisément une rainure circulaire 35 à sa base, emboîtée sur une pièce de support annulaire 36 pourvu d'un rebord à l'équerre 37 coopérant avec le fond de la rainure 35. Cette pièce est, elle-même, emboîtée dans une saillie 38 en forme de boisseau conique du boîtier 22. On observera encore que la base de la douille 32 est évasée pour épouser le contour tronconique de la saillie 38.

Comme on peut notamment le voir sur la figure 4, l'arbre 23 côté moteur comporte une colonnette 33 à section circulaire, prolongée par le doigt d'entraînement 23', qui occupe un tiers de sa surface, soit 120°, à l'une de ses extrémités longitudinales.

En pratique, cet arbre 23 est réalisé en acier usiné et a une longueur de 60 mm pour une longueur de colonnette 33 de 50 mm, tandis que son diamètre extérieur est de 22 mm.

L'autre arbre 24 également en acier usiné comporte, quant à lui, un disque 34 prolongé par le doigt d'entraînement 24'.

Le doigt d'entraînement 24' occupe ici également un secteur angulaire de 120°. Il a la même hauteur que le disque 34, soit 10 mm en pratique, pour un diamètre extérieur du disque 34 de 22 mm.

On observera encore que les arbres 23 et 24 sont chanfreinés à leurs extrémités coopérant l'une avec l'autre, pour des raisons de commodité de fonctionnement.

Il en résulte deux doigts d'entraînement de 120°; laissant donc 120° de marche non assistée sur l'étendue angulaire de 360° sur laquelle ils évoluent ensemble, comme on peut notamment le voir sur la figure 6.

Grâce à ces dispositions, la porte 10 peut être entraînée librement par une personne sur les 120° de marche non assistée. En d'autres termes, le secteur de 120° laissé libre par les doigts d'entraînement sur leur étendue angulaire commune de 360° laisse libre la porte 10 de son ouverture manuelle, sans l'intervention du moteur 21.

Par ailleurs, le moteur 21 est apte à assurer l'entraînement de la porte 10 vers sa position d'ouverture par coopération des doigts 23' et 24' l'un avec l'autre engendrant un effet de came.

Plus précisément, lors de cet entraînement, une face de chacun des doigts d'entraînement 23', 24' vient en contact l'une de l'autre. Il s'agit, dans chaque cas, de l'une des deux faces formant le dièdre de 120°.

En plus d'assurer l'entraînement de la porte lors de son ouverture, le moteur 21 est, en outre, débrayé de la porte 10 lors de la fermeture de celle-ci.

Deux cas peuvent alors se présenter : soit la porte 10 suit l'arbre 23 du moteur 21 sans aucun entraînement par celui-ci, soit le moteur 21 revient plus rapidement en position initiale. Dans ce deuxième cas, les portions de 120° occupées par les doigts d'entraînement 23', 24' du moteur 21 et de la porte 10 ne sont plus en contact. La porte 10 revient donc librement vers sa position de fermeture, car le doigt d'entraînement 24' lui correspondant évolue dans les 120° de marche non assistée. De ce fait, la fermeture s'effectue comme en fermeture manuelle. Dans les deux cas, il y a débrayage entre le moteur 21 et la porte 10 grâce à la configuration spécifique des doigts d'entraînement 23', 24' des arbres 23, 24.

Enfin, si l'on bloque la porte 10 lors de son entraînement en ouverture par un moyen quelconque, engendrant ainsi un couple trop élevé pour le moteur 21, ce dernier s'arrête.

On observera que la porte 10, ainsi équipée d'un dispositif d'ouverture 20 conforme à l'invention, peut s'adapter à toutes les situations, puisqu'elle peut notamment être conçue de toutes dimensions et selon les normes en vigueur en la matière.

Celle-ci peut également être réalisée de différentes manières :elle peut, par exemple, comporter une partie fixe, avoir une ouverture à droite comme à gauche.

En outre, l'ensemble 1 et /ou ce dispositif d'ouverture 20 peuvent être conçus avec l'aspect design que le client désire.

De plus, aucune cellule ni détecteur n'est nécessaire pour le dispositif conforme à l'invention, le moteur réversible n'ayant aucun effet lors de la fermeture, laquelle s'effectue de surcroît avec douceur.

Plus généralement, la présente invention propose donc notamment un dispositif d'ouverture d'une porte à distance, comportant un moteur débrayable de manière à permettre l'entraînement dans le sens de l'ouverture de la porte, ainsi que la fermeture de celle-ci avec débrayage entre la porte et le moteur, l'entraînement étant réalisé par un axe usiné comportant un doigt d'entraînement de 120° et un autre axe usiné de la même manière et destiné à être soudé sur la porte, cet entraînement par les axes usinés laissant 120° de marche non assistée pour une ouverture manuelle de la porte.

Bien entendu, la présente invention n'est pas limitée au mode de réalisation décrit et représenté mais englobe toute variante d'exécution couverte par les revendications.

D'autres formes d'arbres peuvent notamment être envisagées. Les angles des secteurs des doigts d'entraînement peuvent également varier, en fonction de l'angle d'ouverture de porte recherché.

L'entraînement des arbres peut, par exemple, également être réalisé avec un moteur disposé parallèlement aux arbres.

## Revendications

1. Dispositif d'ouverture de porte, comportant un moteur réversible (21) et deux arbres (23, 24) agencés coaxialement, dont l'un est en prise d'entraînement avec le moteur, l'autre arbre étant destiné à être solidarisé à la porte, les deux arbres étant adaptés à coopérer l'un avec l'autre pour l'entraînement en rotation de la porte par le moteur vers sa position d'ouverture, au moyen chacun d'un doigt d'entraînement (23', 24') prolongeant axialement l'arbre de manière à y former un secteur angulaire évoluant sur une étendue angulaire commune aux deux secteurs angulaires des doigts d'entraînement, ces secteurs angulaires laissant libre une partie de l'étendue angulaire, au bénéfice d'une ouverture manuelle de la porte et d'un débrayage de la porte et du moteur lors de la fermeture de la porte, la porte suivant l'arbre en prise d'entraînement avec le moteur lors de la fermeture, sans aucun entraînement par celui-ci, ou bien le moteur revenant en position initiale plus rapidement que la porte lors de la fermeture, **caractérisé en ce que** l'arbre (24) côté porte comporte un disque (34) prolongé par le doigt d'entraînement (24'), tandis que l'arbre (23) côté moteur comporte une colonnette (33) prolongée par le doigt d'entraînement (23'), chaque doigt d'entraînement occupant une partie de la section circulaire de l'une des extrémités longitudinales du disque et de la colonnette, respectivement.

2. Dispositif selon la revendication 1, **caractérisé en ce que** l'étendue angulaire est de 360° et chaque secteur angulaire forme un angle inférieur ou égal à 120°, avantageusement compris entre 90° et 120°, et de préférence égal à 120°.

3. Dispositif selon l'une des revendications précédentes, **caractérisé en ce qu'**il comporte une douille (32) propre à être disposée coaxialement aux arbres et formant palier pour l'arbre côté porte.

4. Dispositif selon l'une des revendications précédentes, **caractérisé en ce que** le moteur s'étend globalement à angle droit avec l'arbre associé à celui-ci et est en prise avec cet arbre par l'intermédiaire de moyens d'entraînement.

5. Dispositif selon la revendication 4, **caractérisé en ce que** les moyens d'entraînement comportent un engrenage à roue dentée (28) et vis sans fin (29) tangente.

6. Dispositif selon l'une quelconque des revendications précédentes, **caractérisé en ce que** le moteur est programmé pour revenir à sa position initiale après avoir entraîné la porte vers sa position d'ouverture, de préférence après temporisation.

7. Dispositif selon l'une quelconque des revendications précédentes, **caractérisé en ce que** le moteur est secouru par batterie(s) lors d'une panne électrique.

8. Dispositif selon l'une quelconque des revendications précédentes, **caractérisé en ce que** le moteur est logé dans un boîtier.

9. Ensemble comportant une porte (10) ainsi qu'un dispositif d'ouverture (20) de celle-ci conforme à l'une quelconque des revendications précédentes.

10. Ensemble selon la revendication 9, **caractérisé en ce que** la porte comporte un profilé anti pince-doigt.

11. Ensemble selon l'une quelconque des revendications 9 et 10, **caractérisée en ce que** la porte est munie d'un ferme-porte hydraulique.

12. Ensemble selon l'une quelconque des revendications 9 à 11, **caractérisé en ce que** le dispositif d'ouverture est monté sous la porte en vue de pouvoir enterrer le moteur.

## Patentansprüche

1. Türöffnungsvorrichtung, einen reversiblen Motor (21) und zwei koaxial angeordnete Wellen (23, 24) umfassend, wobei die eine in Mitnahmeeingriff mit dem Motor steht und die andere Welle dazu bestimmt ist, an der Tür befestigt zu werden, wobei die zwei Wellen dazu angepasst sind, miteinander zum Drehantrieb der Tür durch den Motor zu ihrer Öffnungsposition mittels eines Mitnahmefingers (23', 24') zusammenzuwirken, der die Welle axial verlängert, um an ihr einen Winkelsektor zu bilden, der sich über eine den zwei Winkelsektoren der Mitnahmefinger gemeinsame Winkelreichweite entwickelt, wobei diese Winkelsektoren einen Teil der Winkelreichweite zugunsten einer manuellen Öffnung der Tür und einer Entriegelung der Tür und des Motors beim Schließen der Tür freilassen, wobei die Tür die Welle in Mitnahmeeingriff mit dem Motor beim Schließen ohne irgendeinen Antrieb durch diesen folgt, oder aber der Motor beim Schließen schneller in eine Ausgangsstellung zurückkehrt als die Tür, **dadurch gekennzeichnet, dass** die Welle (24) türseitig eine durch den Mitnahmefinger (24') verlängerte Scheibe (34) umfasst, während die Welle (23) motorseitig eine durch den Mitnahmefinger (23') verlängerte Säule (33) umfasst, wobei jeder Mitnahmefinger einen Teil des Kreisabschnitts eines der Längsenden der Scheibe bzw. der Säule einnimmt.

2. Vorrichtung nach Anspruch 1, **dadurch gekennzeichnet, dass** die Winkelreichweite 360° beträgt und jeder Winkelsektor einen Winkel bildet, der kleiner als oder gleich 120°, vorteilhafterweise zwischen 90° und 120°, und bevorzugt gleich 120° ist.

3. Vorrichtung nach einem der vorhergehenden Ansprüche, **dadurch gekennzeichnet, dass** sie eine Buchse (32) umfasst, die dazu geeignet ist, koaxial zu den Wellen angeordnet zu sein und ein türseitiges Lager für die Tür bildet.

4. Vorrichtung nach einem der vorhergehenden Ansprüche, **dadurch gekennzeichnet, dass** sich der Motor insgesamt im rechten Winkel mit der ihm zugeordneten Welle erstreckt und über Mitnahmeeinrichtungen mit dieser Welle in Eingriff ist.

5. Vorrichtung nach Anspruch 4, **dadurch gekennzeichnet, dass** die Mitnahmeeinrichtungen ein Getriebe mit einem Zahnrad (28) und einer tangentiale Schnecke (29) umfassen.

6. Vorrichtung nach einem der vorhergehenden Ansprüche, **dadurch gekennzeichnet, dass** der Motor dazu programmiert ist, vorzugsweise nach einer Verzögerung in seine Ausgangsposition zurückzukehren, nachdem er die Tür in ihre Öffnungsposition angetrieben hat.

7. Vorrichtung nach einem der vorhergehenden Ansprüche, **dadurch gekennzeichnet, dass** der Motor bei einem Stromausfall batterieunterstützt wird.

8. Vorrichtung nach einem der vorhergehenden Ansprüche, **dadurch gekennzeichnet, dass** der Motor in einem Gehäuse untergebracht ist.

9. Einheit, eine Tür (10) sowie eine Öffnungsvorrichtung (20) für diese nach einem der vorhergehenden Ansprüche umfassend.

10. Einheit nach Anspruch 9, **dadurch gekennzeichnet, dass** die Tür ein Fingerklemmschutzprofil umfasst.

11. Einheit nach einem der Ansprüche 9 und 10, **dadurch gekennzeichnet, dass** die Tür mit einem hydraulischen Türschließer ausgestattet ist.

12. Einheit nach einem der Ansprüche 9 bis 11, **dadurch gekennzeichnet, dass** die Öffnungsvorrichtung im Hinblick darauf unter der Tür montiert ist, den Motor im Boden versenken zu können.

## Claims

1. A door opening device, comprising a reversible motor (21) and two shafts (23, 24) arranged coaxially, one of which is in engagement with the motor for driving, the other shaft being provided to be fastened to the door, the two shafts being configured to cooperate with each other for the rotational driving of the door by the motor towards its open position, each by means of a drive finger (23', 24') axially extending the shaft so as to form thereon an angular sector moving over an angular range common to both angular sectors of the drive fingers, these angular sectors leaving free part of the angular range, to allow manual opening of the door and decoupling of the door and the motor on closing the door, the door following the shaft in engagement with the motor for driving on closing, without any driving by the motor, or the motor returning into into initial position faster than the door on closing, **characterized in that** the shaft (24) on the door side comprises a disc (34) extended by the drive finger (24'), while the shaft (23) on the motor side comprises a column (33) extended by the drive finger (23'), each drive finger occupying part of the circular section of one of the longitudinal ends of the disc and of the column, respectively.

2. A device according to claim 1, **characterized in that** the angular range is 360° and each angular sector forms an angle less than or equal to 120°, advantageously comprised between 90° and 120°, and preferably equal to 120°.

3. A device according to one of the preceding claims, **characterized in that** it comprises a bushing (32) configured to be disposed coaxially to the shafts and forming a bearing for the shaft on the door side.

4. A device according to one of the preceding claims, **characterized in that** the motor extends substantially at a right angle to the shaft associated therewith and is engaged with that shaft via drive means.

5. A device according to claim 4, **characterized in that** the drive means comprise a gearing with a toothed wheel (28) and a tangent worm screw (29).

6. A device according to any one of the preceding claims, **characterized in that** the motor is programmed to return to its initial position after having driven the door towards its open position, preferably after a timeout.

7. A device according to any one of the preceding claims, **characterized in that** the motor has battery backup in the event of a power cut.

8. A device according to any one of the preceding claims, **characterized in that** the motor is housed in a casing.

9. An assembly comprising a door (10) as well as a device (20) for opening the latter in accordance with any one of the preceding claims.

10. An assembly according to claim 9, **characterized in that** the door comprises an anti finger-pinch strip.

11. An assembly according to any one of claims 9 and 10, **characterized in that** the door is provided with a hydraulic door-closer.

12. An assembly according to any one of claims 9 to 11, **characterized in that** the opening device is mounted under the door so as to be able to bury the motor.
